# DEMANDE DE BREVET EUROPEEN

(11) **EP 2 923 753 A1**
(43) Date de publication de la demande: **30.09.2015**
(21) Numéro de dépôt: 15155681.8
(22) Date de dépôt: 19.02.2015
(51) Int. Cl.: B01D 53/94

(54) **Ensemble de dépollution des gaz de combustion**

(30) Priorité: 26.03.2014 FR 1452565
(71) Demandeur: PEUGEOT CITROËN AUTOMOBILES SA, 78140 Vélizy-Villacoublay (FR)
(72) Inventeur: Bozian, Mohamed, 95170 DEUIL LA BARRE (FR)

(57) **Abrégé**

L'invention concerne un ensemble (8) de dépollution des gaz de combustion comprenant un premier organe (13) prévu pour stocker les NOx sur une plage de température comprise entre une température ambiante et un seuil haut de température et combinant :
- un piège à NOx pour stocker les NOx sur la partie supérieure de la plage de température et pour réduire les NOx en présence de gaz de combustion riches à une température comprise dans cette partie supérieure de la plage de température,
- un adsorbeur passif d'oxydes d'azote, pour stocker les NOx sur la partie inférieure de la plage de température,
un filtre à particules (16) comportant un revêtement de réduction catalytique sélective des NOx, caractérisé en ce que le filtre à particules (16) ne comprend que ce revêtement, ce dernier étant prévu pour compléter l'action de réduction de l'organe de dépollution (13).

## Description

### Domaine technique de l'invention

La présente invention se rapporte au domaine de la dépollution des gaz d'échappement de moteur à combustion interne. L'invention concerne plus particulièrement un ensemble de dépollution des gaz de combustion produits par exemple par un moteur à combustion interne.

Les polluants issus de la combustion d'un moteur Diesel ou essence sont majoritairement les hydrocarbures imbrûlés (HC), les oxydes d'azote (monoxyde d'azote NO et dioxyde d'azote NO2), les oxydes de carbone (monoxyde de carbone CO et dioxyde de carbone CO2), et dans le cas des moteur Diesel et des moteurs à injection directe essence, des particules carbonées, qu'on désignera dans la suite de la description sous l'expression de « suies ».

Afin de respecter les normes environnementales internationales, la maîtrise des émissions de HC, de CO, de NOx et de particules est nécessaire et des technologies de post-traitement des gaz d'échappement sont indispensables. On connait divers organes de dépollution des gaz d'échappement cependant leur agencement dans une ligne d'échappement se doit de former un ensemble cohérent et synergique.

De tels ensembles visant ce but sont connus par exemple du document WO2012166833 qui décrit plusieurs agencements possibles de ligne de dépollution autour d'un filtre à particules comprenant en amont une zone d'oxydation des suies et en aval du filtre une zone de réduction des oxydes d'azote. L'amont et l'aval sont définis relativement au sens de circulation des gaz d'échappement. Le document WO2012166833 propose de placer en amont du filtre à particules un injecteur d'agent réducteur des oxydes d'azote et ou divers organes de dépollution tels qu'un piège à oxydes d'azote (encore désigné LNT pour l'acronyme anglais de Lean NOx Trap), un catalyseur à accumulateur d'oxydes d'azote (encore désigné NAC pour l'acronyme anglais de NOx Adsorber Catalyst), un catalyseur d'oxydation Diesel (encore désigné DOC pour l'acronyme anglais de Diesel Oxidation Catalyst) pour l'oxydation des hydrocarbures imbrûlés (HC) et du monoxyde de Carbone, CO.

Le document WO2012166833 propose aussi de placer en aval du filtre à particules divers organes de dépollution tels qu'un catalyseur d'oxydation d'ammoniac (encore désigné AMOX pour l'acronyme anglais de Ammonia oxidation catalyst ou ASC pour l'acronyme anglais de Ammonia Slip Catalyst) pour catalyser l'ammoniac résiduel, un catalyseur de réduction sélective des oxydes d'azote (encore désigné catalyseur SCR pour l'acronyme anglais de Selective Catalytic Réduction).

Les combinaisons possibles sont alors nombreuses, ce qui ne permet pas d'identifier la ligne présentant la meilleure efficacité.

Il existe donc un besoin pour définir une ligne de dépollution permettant d'améliorer l'efficacité et la synergie d'un ensemble de post-traitement des gaz d'échappement combinant plusieurs organes de dépollution.

Un but de la présente invention est donc de proposer un ensemble de dépollution des gaz de combustion produits par exemple par un moteur à combustion interne à synergie et efficacité améliorée.

Pour atteindre cet objectif, il est prévu selon l'invention un ensemble de dépollution des gaz de combustion comprenant un premier organe de dépollution prévu pour stocker les oxydes d'azote sur une plage de température de stockage comprise entre une température ambiante et un seuil haut de température, ce premier organe de dépollution combinant :
- une première partie dite piège à oxydes d'azote prévue pour stocker les oxydes d'azote sur une partie de la plage de température de stockage de l'organe de dépollution comprise entre une température intermédiaire et le seuil haut de température, et pour réduire les oxydes d'azote en présence de gaz de combustion riches à une température comprise dans cette partie supérieure de la plage de température de stockage,
- une seconde partie dite adsorbeur passif d'oxydes d'azote, prévue pour stocker les oxydes d'azote sur une partie de la plage de température de stockage de l'organe de dépollution comprise entre la température ambiante et la température intermédiaire, et relâcher les oxydes d'azote au-delà de cette température intermédiaire sans les traiter,
- cet ensemble comprenant en outre, immédiatement en aval, relativement au sens de circulation des gaz de combustion dans le dit ensemble (8), un filtre à particules (comportant un revêtement de réduction catalytique sélective des oxydes d'azote,
caractérisé en ce que le filtre à particules ne comprend que ce revêtement de réduction catalytique sélective des oxydes d'azote, ce revêtement étant prévu pour traiter les oxydes d'azote relâchés au-delà de la température intermédiaire par la seconde partie dite adsorbeur passif d'oxydes d'azote et compléter l'action de réduction des oxydes d'azote de l'organe de dépollution au-delà du seuil de haut température.

De préférence, l'ensemble de dépollution comprend entre le premier organe de dépollution et le filtre à particules un volume de mélange destiné à recevoir un agent pour la réduction catalytique des oxydes d'azote envoyé dans le volume de mélange au moyen d'un injecteur disposé dans ledit ensemble au niveau du volume de mélange.

De préférence encore, le volume de mélange comprend un mélangeur destiné à homogénéiser les gaz de combustion à l'agent pour la réduction catalytique des oxydes d'azote.

De préférence encore, le volume de mélange sépare le premier organe de dépollution du filtre à particules d'une distance comprise entre 5 cm et 10 cm.

Dans une variante, l'ensemble de dépollution comprend des moyens de chauffage de l'injecteur.

Dans une autre variante, l'ensemble de dépollution comprend immédiatement en aval du filtre à particules un catalyseur d'oxydation d'ammoniac.

Dans une autre variante, la partie supérieure de la plage de température de stockage de l'organe de dépollution est comprise entre la température intermédiaire de 200°C et le seuil haut de température, ce dernier étant de 350°C.

L'invention concerne aussi un véhicule automobile comprenant un moteur à combustion interne relié à une ligne d'échappement, dans lequel la ligne d'échappement comprend un ensemble de dépollution des gaz de combustion selon l'une quelconque des variantes précédemment décrites, le premier organe de dépollution étant destiné à être le premier organe de dépollution rencontré par les gaz de combustion.

L'invention concerne aussi un véhicule automobile comprenant un moteur à combustion interne relié à une ligne d'échappement, dans lequel la ligne d'échappement comprend un ensemble de dépollution des gaz de combustion dans sa variante avec un catalyseur d'oxydation d'ammoniac, le catalyseur d'oxydation d'ammoniac étant destiné à être le dernier organe de dépollution rencontré par les gaz de combustion.

Dans une variante, le véhicule automobile comprenant un turbocompresseur comportant une turbine disposée dans la ligne d'échappement, l'ensemble de dépollution des gaz de combustion est conçu pour d'adapter directement à la turbine.

### Brève description des dessins

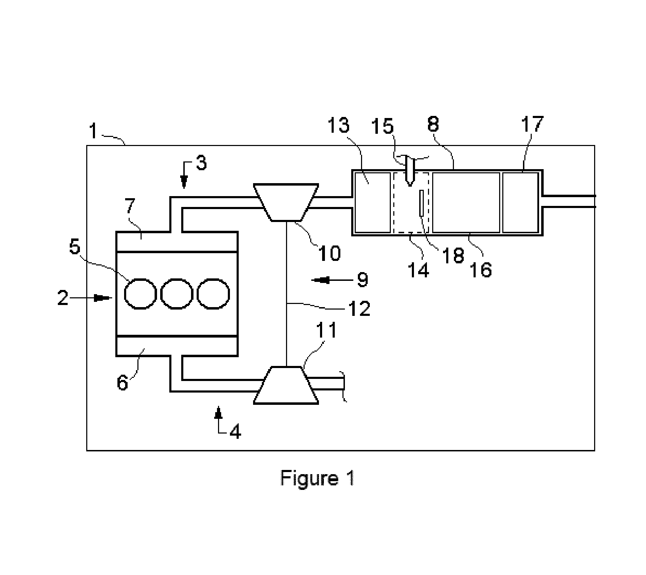

D'autres particularités et avantages apparaîtront à la lecture de la description ci-après d'un mode particulier de réalisation, non limitatif de l'invention, faite en référence à la figure 1.
- La figure 1 est une représentation schématique d'un véhicule automobile équipé d'un ensemble de dépollution de l'invention.

### Description détaillée

La figure 1 présente un véhicule 1 automobile équipé d'un ensemble de motorisation comprenant un moteur 2 à combustion interne relié à une ligne 3 d'échappement des gaz de combustion produits dans des cylindres 5 lors du fonctionnement du moteur 2. Le moteur 2 à combustion interne est également relié à une ligne 4 d'admission d'air pour alimenter la combustion.

La ligne 4 d'admission est reliée au moteur 2 au moyen d'un répartiteur 6 d'admission destiné à répartir l'air admis dans les différents cylindres 5 du moteur.

La ligne 3 d'échappement est reliée au moteur 2 au moyen d'un collecteur 7 d'échappement destiné à rassembler les gaz de combustion produits dans les cylindres 5 du moteur 2 dans la ligne 3 d'échappement.

La ligne 3 d'échappement comprend encore un ensemble 8 de dépollution conforme à un mode de réalisation préféré de l'invention.

L'ensemble de motorisation peut encore comprendre un turbocompresseur 9 comportant une turbine 10 disposée dans la ligne 3 d'échappement en amont de l'ensemble 8 de dépollution (dans la ligne 3 d'échappement, l'amont et l'aval sont définis relativement au sens de circulation des gaz d'échappement). La turbine 10 entraine un compresseur 11 disposé dans la ligne 3 d'admission, au moyen d'un axe de transmission 12.

L'ensemble 8 de dépollution de l'invention comprend :
- Un premier organe de dépollution 13 combinant une première partie dite piège à NOx (encore désigné LNT pour l'acronyme anglais de Lean NOx Trap) et une seconde partie dite adsorbeur passif d'oxydes d'azote (encore désigné PNA, pour l'acronyme anglais de Passive NOx Adsorber), ceci pour accroitre le domaine en température de stockage des NOx.

Dans son ensemble, cet organe de dépollution 13 permet le traitement efficace à partir d'une température seuil, par exemple de 140°C du monoxyde de carbone, CO, des hydrocarbures imbrûlés, HC, les oxydes d'azote NOx, et la réalisation d'un ratio NO₂/NOx = 0,5.

L'organe de dépollution 13 permet dans son ensemble de stocker les oxydes d'azote sur une plage de température comprise entre la température ambiante, par exemple 25°C et un seuil haut de température, ici de préférence 350°C.

La seconde partie adsorbeur passif d'oxydes d'azote (PNA) de l'organe de dépollution 13 est prévue pour accumuler efficacement les oxydes d'azote à basse température, c'est-à-dire sur la partie inférieure de la plage de température de stockage, c'est-à-dire ici de la température ambiante jusqu'à 200°C, au-delà de cette température les NOx sont relâchés sans être traités par l'organe de dépollution 13 mais traités en aval, comme nous le détaillerons après.

Pour les températures comprises sur la partie supérieure de la plage de température de stockage de l'organe de dépollution 13, c'est-à-dire ici entre une température intermédiaire, de préférence 200°C, et le seuil haut de température, de préférence 350°C, la partie piège à NOx (LNT) de l'organe de dépollution 13 capte efficacement les oxydes d'azote, NOx.

En présence de gaz de combustion riches à une température comprise dans cette partie supérieure de la plage de température de stockage, la partie piège à NOx (LNT) de l'organe de dépollution 13 relâche les oxydes d'azote en les transformant par réduction en diazote. Cette partie piège à NOx (LNT) de l'organe de dépollution 13 est efficace entre la température intermédiaire et le seuil haut de température (entre 200°C et 350°C) pour la réduction des oxydes d'azote, NOx.

L'organe de dépollution 13 permet avantageusement de faire de l'exotherme en phase riche par élévation de la température en brûlant les hydrocarbures imbrûlés, HC. Ceci notamment favorise les des phases de régénération du filtre à particules 16 pendant lesquelles les suies ayant été retenues sont brûlées.

La partie piège à oxydes d'azote (LNT) de l'organe de dépollution 13 peut comprendre des espèces chimiques telles que du baryum, du platine, du palladium, du rhodium.

La partie adsorbeur passif d'oxydes d'azote (PNA) de l'organe de dépollution 13 peut comprendre des espèces chimiques telles que de la cérine, du platine, du palladium.

L'ensemble 8 de dépollution de l'invention comprend encore dans le sens de l'aval :
- Un volume 14 de mélange destiné à recevoir un agent réducteur envoyé dans le volume 14 de mélange de l'ensemble 8 de dépollution au moyen d'un injecteur 15. L'injecteur est disposé dans l'ensemble 8 de dépollution au niveau du volume 14 de mélange. L'agent réducteur est destiné à fournir de l'ammoniac pour la réduction catalytique sélective des oxydes d'azote. L'agent réducteur peut être une solution aqueuse d'urée. Dans ce cas il peut être avantageux de prévoir des moyens de chauffage de l'injecteur 15 permettant une injection de l'agent réducteur dans le volume 14 de mélange à partir de 140 à 150°C, sans risque d'encrassement. La commande de l'injecteur 15 et la gestion de l'injection d'agent réducteur peuvent être pilotés par une unité de contrôle électronique en fonction des besoins d'agent réducteur pour le traitement des oxydes d'azote.
- Un substrat formant un filtre à particules 16. Ce substrat qui peut être choisi parmi des céramiques courantes donc économiques telles que le titanate d'aluminium ou le carbure de silicium présentent une structure interne adaptée à retenir les particules de suies présentes dans les gaz produits par la combustion. Classiquement une telle structure présente une pluralité de canaux parallèles obstrués en alternance par exemple par des bouchons céramiques de manière à forcer les gaz de combustion à entrer par des canaux d'entrée, puis traverser les parois séparatrices poreuses des canaux et pour ressortir par des canaux de sortie des gaz de combustion.

Ce substrat comprend encore un revêtement de réduction catalytique sélective des oxydes d'azote. Conformément à l'invention, le filtre à particules 16 ne comprend qu'un revêtement de réduction catalytique des oxydes d'azote destinée à activer une réaction de réduction entre les oxydes d'azote et l'ammoniac fourni par l'agent réducteur et donc pas d'autre revêtement catalytique. Ainsi conformé, le substrat permet de filtrer les particules de suies et d'éliminer par réduction les oxydes d'azote, NOx.

Ce filtre à particules 16 comprenant le revêtement de réduction catalytique des oxydes d'azote est efficace à haute température, autrement dit au-dessus de 150°C et complète ainsi l'action de réduction de l'organe de dépollution 13 dont l'efficacité de réduction au-delà de 350°C est moins bonne que la réduction catalytique sélective des oxydes d'azote faite dans le filtre à particules 16.

Afin de rester compact tout en permettant la création de l'ammoniac à partir de l'agent réducteur, le volume de mélange 14 peut comprendre un mélangeur 18, autrement dit un dispositif favorisant l'homogénéisation des gaz de combustion avec l'agent réducteur pour la réduction catalytique des oxydes d'azote, avant leur entrée dans la filtre à particules 16. La présence du mélangeur 18 permet de réduire la longueur du volume de mélange 14. En pratique, la longueur du volume de mélange 14 sépare l'organe de dépollution 13 du filtre à particules 16 d'une distance comprise entre 5 cm et 10 cm.

L'ensemble 8 de dépollution de l'invention peut encore comprendre, immédiatement en aval du filtre à particules 16 un second substrat formant catalyseur d'oxydation d'ammoniac 17 (encore désigné AMOX pour l'acronyme anglais de Ammonia oxidation catalyst ou encore désigné ASC pour l'acronyme anglais de Ammonia Slip Catalyst) permettant d'oxyder l'ammoniac résiduel qui pourrait s'échapper filtre à particules 16.

Dans cet agencement de ligne d'échappement 3, l'organe de dépollution 13 est de préférence le premier organe de dépollution rencontré par les gaz de combustion en provenance du moteur 2. Dans cet agencement encore, le catalyseur d'oxydation d'ammoniac 17 est de préférence le dernier organe de dépollution rencontré par les gaz de combustion en provenance du moteur 2.

Dans un autre exemple de réalisation, il peut être prévu de concevoir l'ensemble 8 de dépollution de sorte qu'il puisse d'adapter directement à la turbine 10 du turbocompresseur, par exemple par une bride de fixation. Ainsi, en étant en bout de la ligne 3 d'échappement, proche de la turbine 10, l'ensemble 8 de dépollution bénéficie d'une température élevée des gaz de combustion (entre 600 et 650 °C) ce qui permet d'amorcer une régénération du filtre à particules 16, c'est dire une élimination par combustion des suies retenues par ce filtre à particules 16.

Dans un autre exemple de réalisation, le véhicule peut ne pas comprendre de turbocompresseur 12. Dans ce cas il peut être prévu de concevoir l'ensemble 8 de dépollution de sorte qu'il puisse d'adapter directement au collecteur 7 d'échappement, par exemple par une bride de fixation. Ainsi, en étant en bout de la ligne 3 d'échappement, proche du collecteur 7 l'ensemble 8 de dépollution bénéficie aussi d'une température élevée des gaz de combustion qui permet d'amorcer les catalyseurs d'oxydation, de réduction et pour initier plus facilement la régénération du filtre à particules 16.

Cet agencement permet d'obtenir une efficacité maximale en dépollution des oxydes d'azote depuis le démarrage du moteur jusqu'à son fonctionnement le plus chaud.

## Revendications

1. Ensemble (8) de dépollution des gaz de combustion comprenant un premier organe de dépollution (13) prévu pour stocker les oxydes d'azote sur une plage de température de stockage comprise entre une température ambiante et un seuil haut de température, ce premier organe de dépollution (13) combinant :
- une première partie dite piège à oxydes d'azote prévue pour stocker les oxydes d'azote sur une partie de la plage de température de stockage de l'organe de dépollution (13) comprise entre une température intermédiaire et le seuil haut de température, et pour réduire les oxydes d'azote en présence de gaz de combustion riches à une température comprise dans cette partie supérieure de la plage de température de stockage,
- une seconde partie dite adsorbeur passif d'oxydes d'azote, prévue pour stocker les oxydes d'azote sur une partie de la plage de température de stockage de l'organe de dépollution (13) comprise entre la température ambiante et la température intermédiaire, et relâcher les oxydes d'azote au-delà de cette température intermédiaire sans les traiter,
- cet ensemble (8) comprenant en outre, immédiatement en aval, relativement au sens de circulation des gaz de combustion dans le dit ensemble (8), un filtre à particules (16) comportant un revêtement de réduction catalytique sélective des oxydes d'azote,
- **caractérisé en ce que** le filtre à particules (16) ne comprend que ce revêtement de réduction catalytique sélective des oxydes d'azote, ce revêtement étant prévu pour traiter les oxydes d'azote relâchés au-delà de la température intermédiaire par la seconde partie dite adsorbeur passif d'oxydes d'azote et compléter l'action de réduction des oxydes d'azote de l'organe de dépollution (13) au-delà du seuil de haut température.

2. Ensemble (8) de dépollution selon la revendication 1, **caractérisé en ce qu'**il comprend entre le premier organe de dépollution (13) et le filtre à particules (16) un volume de mélange (14) destiné à recevoir un agent pour la réduction catalytique des oxydes d'azote envoyé dans le volume (14) de mélange au moyen d'un injecteur (15) disposé dans ledit ensemble (8) au niveau du volume de mélange (14).

3. Ensemble (8) de dépollution selon la revendication 2, **caractérisé en ce que** le volume (14) de mélange comprend un mélangeur (18) destiné à homogénéiser les gaz de combustion à l'agent pour la réduction catalytique des oxydes d'azote.

4. Ensemble (8) de dépollution selon la revendication 3, **caractérisé en ce que** le volume (14) de mélange sépare le premier organe de dépollution (13) du filtre à particules (16) d'une distance comprise entre 5 cm et 10 cm.

5. Ensemble (8) de dépollution selon la revendication 2 ou la revendication 3, **caractérisé en ce qu'**il comprend des moyens de chauffage de l'injecteur (15).

6. Ensemble (8) de dépollution selon l'une quelconque des revendications précédentes, **caractérisé en ce qu'**il comprend immédiatement en aval du filtre à particules (16) un catalyseur d'oxydation d'ammoniac (17).

7. Ensemble (8) de dépollution selon l'une quelconque des revendications précédentes, **caractérisé en ce que** la partie supérieure de la plage de température de stockage de l'organe de dépollution (13) est comprise entre la température intermédiaire de 200°C et le seuil haut de température, ce dernier étant de 350°C.

8. Véhicule (1) automobile comprenant un moteur (2) à combustion interne relié à une ligne (3) d'échappement, **caractérisé en ce que** la ligne (3) d'échappement comprend un ensemble (8) de dépollution des gaz de combustion selon l'une quelconque des revendications précédentes, le premier organe de dépollution (13) étant destiné à être le premier organe de dépollution rencontré par les gaz de combustion.

9. Véhicule (1) automobile comprenant un moteur (2) à combustion interne relié à une ligne (3) d'échappement, **caractérisé en ce que** la ligne (3) d'échappement comprend un ensemble (8) de dépollution des gaz de combustion selon la revendication 6, le catalyseur d'oxydation d'ammoniac (17) étant destiné à être le dernier organe de dépollution rencontré par les gaz de combustion.

10. Véhicule (1) automobile selon la revendication 7 ou la revendication 8, **caractérisé en ce qu'**il comprend un turbocompresseur (9) comportant une turbine (10) disposée dans la ligne (3) d'échappement, l'ensemble (8) de dépollution des gaz de combustion étant conçu pour d'adapter directement à la turbine (10).
